(19) **Europäisches Patentamt**

**European Patent Office**

**Office européen des brevets**

(11) **EP 0 589 213 B1**

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(51) Int. Cl.⁷: **C08L 23/10**, C09J 123/10, B32B 27/32

(21) Anmeldenummer: **93113379.7**

(22) Anmeldetag: **21.08.1993**

(54) **Siegelbare Polypropylen-Mehrschichtfolie, Verfahren zu ihrer Herstellung und ihre Verwendung**

Sealable Polypropylene laminated film, process for its manufacture and its use

Film laminé de polypropylène, procédé pour sa fabrication et son application

(84) Benannte Vertragsstaaten:
**BE DE ES FR GB IT NL**

(30) Priorität: **29.08.1992 DE 4228812**

(43) Veröffentlichungstag der Anmeldung:
**30.03.1994 Patentblatt 1994/13**

(73) Patentinhaber:
**HOECHST AKTIENGESELLSCHAFT
65926 Frankfurt am Main (DE)**

(72) Erfinder:
• **Dries, Thomas, Dr.
D-55270 Schwabenheim (DE)**
• **Schlögl, Gunter, Dr.
D-65779 Kelkheim (DE)**
• **Spaleck, Walter, Dr.
D-65835 Liederbach (DE)**
• **Winter, Andreas, Dr.
D-61479 Glashütten (DE)**

(74) Vertreter:
**Luderschmidt, Schüler & Partner GbR
Patentanwälte,
Postfach 3929
65029 Wiesbaden (DE)**

(56) Entgegenhaltungen:
EP-A- 0 247 898    EP-A- 0 411 968
EP-A- 0 444 339

**Beschreibung**

Die Erfindung betrifft eine Mehrschichtfolie, welche mindestens eine Basisschicht, die überwiegend Polypropylen enthält, und mindestens eine Deckschicht umfaßt.

Die Erfindung betrifft ferner ein Verfahren zur Herstellung der Mehrschichtfolie sowie ihre Verwendung.

Aus der Literatur sind Polypropylenfolien aus einer Polypropylenbasisschicht und Polypropylendeckschichten bekannt. Diese vielfach beschriebenen Folien zeichnen sich durch sehr gute optische Eigenschaften und eine gute Kratzfestigkeit aus. Sie können allerdings nicht auf automatischen Verpackungsmaschinen verarbeitet werden, da sie sehr schlechte Siegeleigenschaften aufweisen. Zum Versiegeln müssen so hohe Temperaturen angewendet werden, daß es zu einem starken Schrumpf in der Siegelzone kommt und die so hergestellten Verpackungen nicht mehr akzeptabel sind. Außerdem sind die Bedruckungs- und Beschichtungseigenschaften von orientierten Polypropylenfolien verbesserungswürdig. Die Oberflächenbehandlung der Folien (z. B. Coronabehandlung oder Flammbehandlung) verbessert zwar diese Eigenschaften, wobei diese Verbesserung aber mit der Lagerzeit oft schnell abnimmt bzw. oft unzureichend ist.

Zur Beseitigung dieser Nachteile versieht man orientierte Polypropylenfolien in der Regel mit Siegelschichten aus statistischen Co- oder Terpolymerisaten aus Propylen und anderen α-Olefinen, Polyethylen oder entsprechenden Polymerblends. Derartige Siegelschichten verschlechtern jedoch die optischen Eigenschaften drastisch, insbesondere der gewünschte Glanz wird deutlich vermindert, und die Trübung nimmt in einem unerwünschten Maße zu. Weiterhin sind Siegeleigenschaften der Co- und Terpolymerdeckschichten verbesserungswürdig.

Es wurden auch Beschichtungen von Polypropylenfolien mit Dispersionen enthaltend Polyvinylidenchlorid oder verschiedene Polyacrylate vorgeschlagen. Dies führt zwar auch zu siegelbaren Folien, die allerdings teuer sind und den entscheidenden Nachteil aufweisen, daß sie nicht regenerierbar sind, d. h. daß während der Folienherstellung zwangsläufig anfallendes Verschnittmaterial, wegen der darauf aufgetragenen Beschichtung, nicht mehr in den Produktionsprozeß zurückgeführt werden kann. Dieser Nachteil ist aber aus wirtschaftlichen und ökologischen Gründen nicht mehr akzeptabel.

Die EP-A-0 484 817 beschreibt eine Propylenfolie mit Deckschichten aus syndiotaktischem Polypropylen. Diese Folien sollen ein ausgewogenes Eigenschaftsspektrum aufweisen, insbesondere gute Siegeleigenschaften und gute optische Eigenschaften, jedoch treten beim Verstrecken dieses Materials gehäuft Probleme, beispielsweise durch Rißbildung in den syndiotaktischen Deckschichten oder durch Delaminierung der Deckschichten von der isotaktischen Kernschicht, auf. Die genannten Probleme beruhen zum einen auf der schlechteren Streckbarkeit von syndiotaktischem Polypropylen und zum anderen auf der geringeren Verträglichkeit von syndiotaktischem und isotaktischem Polypropylen.

Aus EP-A-0,411,968 ist eine orientierte, siegelfähige Folie bekannt, die eine Basisschicht und eine Deckschicht aus isotaktischem Polypropylen aufweist. Die Polie kann als Verpackungsmaterial verwendet werden.

Aus EP-A-0,247,898 ist eine siegelfähige Folie bekannt, die eine Basisschicht, die überwiegend Polypropylene enthält, und eine Deckschicht aus einem isotaktischen Copolymerisat, bestehend aus 90 bis 99 % Propylen, aufweist, sowie seine Verwendung als Verpackungsmaterial.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sich durch gute optische Eigenschaften, insbesondere durch einen guten Glanz und eine geringe Trübung sowie durch gute Siegeleigenschaften auszeichnet.

Je nach ihrem Verwendungszweck soll die Folie gegebenenfalls zusätzlich eine bedruckbare Oberfläche und eine hohe, über lange Lagerzeiten hinweg beständige Oberflächenspannung besitzen, die auch nach mehr als zwei Monaten nicht unter 36 mN/m fällt.

Die der Erfindung zugrundeliegende Aufgabe wird gelöst durch eine Mehrschichtfolie der eingangs genannten Gattung, deren kennzeichnenden Merkmale darin bestehen, daß die Deckschicht siegelfähig ist und ein isotaktisches Homopolymerisat eines Olefins enthält, wobei die Isotaktizität des Propylenhomopolymers mindestens 80 bis 99% und die Molmassen-Dispersität $M_w/M_n$ des Propylenhomopolymers <5 beträgt

Je nach ihrem vorgesehenen Verwendungszweck kann die jeweilige Ausführungsform der Folie transparent, matt, opak, weiß oder weiß-opak sein.

Die Basisschicht der erfindungsgemäßen Mehrschichtfolie enthält im wesentlichen ein Propylenpolymeres und gegebenenfalls weitere zugesetzte Additive in jeweils wirksamen Mengen.

Das Propylenpolymere enthält zum überwiegenden Teil (mindestens 90 %) Propylen und besitzt einen Schmelzpunkt von 120 °C oder höher, vorzugsweise 150 bis 170 °C. Isotaktisches Homopropylenpolymer mit einem ataktischen Anteil von 15 Gew.-% und weniger, bezogen auf das isotaktische Homopropylenpolymer, Copolymere von Ethylen und Propylen mit einem Ethylengehalt von 10 Gew.-% oder weniger, Copolymere von Propylen mit $C_4$-$C_8$-α-Olefinen mit einem α-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Homopropylenpolymer besonders bevorzugt ist. Die angegebenen Gewichtsprozente beziehen sich auf das jeweilige Copolymer bzw. Terpolymer. Das Propylenpolymere der Basisschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Des weiteren ist eine Mischung aus den genannten Propylenhomo- und/oder -copolymeren und/oder -terpolymeren und/oder anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Die Basisschicht kann für opake, weiße oder weiß-opake Folien zusätzlich bis zu 40 Gew.-%, vorzugsweise bis zu 30 Gew.-%, bezogen auf das Gesamtgewicht der Basisschicht, inertes partikelförmiges Material mit einem mittleren Teilchendurchmesser im Bereich von 0,01 bis 8 $\mu$m, vorzugsweise von 0,02 bis 2,5 $\mu$m, enthalten. Die Anwesenheit des inerten partikelförmigen Materials bewirkt, daß sich bei der Streckorientierung der Folie bei geeigneten Temperaturen zwischen der Polymermatrix und dem inerten Material Mikrorisse und Mikrohohlräume, sogenannte Voids, ausbilden, im Bereich derer das sichtbare Licht gebrochen wird. Die Folie erhält dadurch ein opakes Aussehen, was sie für bestimmte Verpackungszwecke, insbesondere auf dem Lebensmittelsektor, besonders geeignet macht. Das inerte partikelförmige Material kann anorganischer oder organischer Natur sein. Bei anorganischem Material sind Calciumcarbonat, Aluminiumsilikat, Siliziumdioxid oder Titandioxid, bei organischem Material Polyethylenterephthalat, Polybutylenterephthalat, Polyester, Polyamide, Polystyrole besonders geeignet, wobei auch die Kombination von verschiedenen anorganischen und/oder organischen Partikeln möglich ist.

Die Modifizierung der Basisschicht in der angegebenen Weise ist an sich bekannt und wird in verschiedenen Anmeldungen (z. B. deutsche Patentanmeldung P 43 15 006.3, DE-A-34 01 218, EP-A-0 180 087, EP-A-0 187 253, EP-A-0 220 619, EP-A-0 475 110) beschrieben, auf welche hiermit ausdrücklich Bezug genommen wird. Dort werden Teilchenarten, deren eingesetzte Menge, Modifizierung durch Beschichtung etc. im einzelnen beschrieben.

Weiterhin kann die Kernschicht in einer bevorzugten Ausführungsform Harze und/oder Antistatika enthalten.

Die erfindungsgemäße Mehrschichtfolie umfaßt gegebenenfalls (eine) weitere zwischen der Basis- und der Deckschicht aufgebrachte Zwischenschicht/en. Diese gegebenenfalls vorhandene/n Zwischenschicht/en enthält/enthalten im wesentlichen Propylenpolymere oder Polypropylenmischungen, wie sie vorstehend für die Basisschicht beschrieben wurden. Grundsätzlich können die Basisschicht und die Zwischenschicht/en aus gleichen oder verschiedenen Propylenpolymeren bzw. Mischungen aufgebaut sein.

Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll.

In einer weiteren vorteilhaften Ausführungsform werden die in der Basis- und/oder Zwischenschicht eingesetzten Propylenpolymeren durch den Zusatz von organischen Peroxiden teilabgebaut. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =     Schmelzflußindex vor dem Zusatz des organischen Peroxids Propylenpolymerer
MFI$_2$ =     Schmelzflußindex des peroxidisch abgebauten Propylenpolymeren

Erfindungsgemäß liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Deckschicht der Mehrschichtfolie enthält ein isotaktisches Olefinhomopolymer, welches als isotaktisches Homopolymeres völlig überraschend hervorragende Siegeleigenschaften aufweist. Damit kann erstmals ein siegelfähiges Deckschichtmaterial aus einem isotaktischen olefinischen Homopolymeren zur Verfügung gestellt werden.

Diese Homopolymeren werden durch Polymerisation eines Olefins der Formel R$^a$-CH=CH-R$^b$, worin R$^a$ und R$^b$ gleich oder verschieden sind und Wasserstoff oder einen Kohlenwasserstoffrest mit 1 bis 14 C-Atomen bedeuten oder R$^a$ und R$^b$ mit den sie verbindenden Atomen einen Ring bilden können, hergestellt, wobei die Polymerisation in Gegenwart eines Katalysators aus einem Metallocen und einem Cokatalysator durchgeführt wird. Die Herstellung dieser Polyolefine selbst ist jedoch nicht Gegenstand der vorliegenden Erfindung. Die entsprechenden Verfahren sind bereits in EP-A-0 302 424, EP-A-0 336 128 und EP-A-0 336 127 beschrieben, auf welche hier ausdrücklich Bezug genommen wird.

Unter isotaktischen olefinischen Homopolymeren sind Polymerisate zu verstehen, welche aus einer Monomerart aufgebaut sind. Homopolymere im Sinne der vorliegenden Erfindung sind auch solche Polymere, die zum überwiegenden Teil aus einer Monomerart aufgebaut sind, jedoch auch noch einen geringen Anteil anderer Comonomerer enthalten. Dieser Anteil ist so gering, daß die wesentlichen Eigenschaften des Homopolymeren nicht beeinflußt werden. Siegelfähige Propylenhomopolymere mit einem Propylengehalt von 96 bis 100 Gew.-%, vorzugsweise 98 bis 99,99 Gew.-%, sind besonders vorteilhaft.

Es wurde völlig unerwartet gefunden, daß diese Homopolymeren des Propylens sehr gute Siegeleigenschaften aufweisen. Dieses Ergebnis überraschte in der Tat, da bisher bekannte isotaktische Homopolymere des Propylens quasi nicht siegelfähig sind.

Die für erfindungsgemäße Deckschichten geeigneten Homopolymeren sind alle hochisotaktisch. Der bestimmte ataktische Anteil liegt unter <5 %, teilweise sogar unter <1 %. Die mittels $^{13}$C-NMR bestimmte Isotaxie der Homopolymeren liegt mindestens über 70 %, insbesondere über 80 %, vorzugsweise im Bereich von 88 bis 98 %. Es wird vermutet, daß diese Polymeren eine völlig neuartige Struktur aufweisen, welche die ungewöhnlichen Eigenschaften bedingt. Diese Annahme wird gestützt durch Ergebnisse, die bei der Bestimmung der zur Charakterisierung geeigneten Parameter gefunden wurden. Die einzelnen Wertebereiche bzw. bevorzugte Bereiche der für die Charakterisierung des siegelfähigen Homopolymeren geeigneten Parameter sind in der folgenden Tabelle 1 zusammengestellt:

TABELLE 1

| | Bereich | bevorzugter Bereich | besonders bevorzugter Bereich |
|---|---|---|---|
| Isotaktizität nach $^{13}$C-NMR | 80-99 % | 88-98 % | 90-97 % |
| mittlere isotaktische Blocklänge $n_{iso}$ | 10-140 | 15-80 | 20-50 |
| mittlere Molmasse $M_w$ (g/mol) | $5 \cdot 10^4$-$2 \cdot 10^6$ | $1 \cdot 10^5$-$1 \cdot 10^6$ | $1,5 \cdot 10^5$-$5 \cdot 10^5$ |
| Molmassen-Dispersität $M_w/M_n$ | <5 | <4 | <3,2 |
| Schmelzpunkt nach DSC | 115-160 °C | 125-150 °C | 135-145 °C |
| Schmelzflußindex MFI nach DIN 53 735 (230 °C, 50 N) | 0,1-1 000 g/10 min | 1-100 g/10 min | 2-50 g/10 min |
| Viskositätszahl VZ | 70-2 000 cm$^3$/g | 100-1 000 cm$^3$/g | 150-750cm$^3$/g |

Die siegelfähigen Homopolymeren werden vorteilhaft durch die Angabe von mindestens zwei der obengenannten (Tabelle) Parameter charakterisiert, beispielsweise durch den Schmelzpunkt und einen weiteren Parameter oder durch die Isotaxie und einen weiteren Parameter. Vorteilhaft ist die Angabe von Schmelzpunkt und mittlerer isotaktischer Blocklänge oder Schmelzpunkt und Isotaxie oder Isotaxie und mittlerer isotaktischer Blocklänge oder Isotaxie und mittlerer Molmasse oder Isotaxie und Molmassendispersität.

Die erfindungsgemäße Folie ist mindestens zweischichtig und umfaßt als wesentliche Schichten immer die Basisschicht und zumindest eine erfindungsgemäße Deckschicht, gegebenenfalls können zwischen Basis- und Deckschicht zusätzliche Zwischenschichten angeordnet sein. Die Auswahl der Anzahl der Schichten hängt in erster Linie von dem vorgesehenen Einsatzzweck ab, wobei drei-, vier- und fünfschichtige Ausführungsformen besonders bevorzugt sind.

Die Gesamtdicke der Folie kann innerhalb weiter Grenzen variieren und richtet sich nach dem beabsichtigten Verwendungszweck.

Die bevorzugten Ausführungsformen der erfindungsgemäßen Folie haben Gesamtdicken von 10 bis 120 μm, wobei 20 bis 80 μm, insbesondere 30 bis 60 μm, bevorzugt sind.

Die Dicke der gegebenenfalls vorhandenen Zwischenschicht/en beträgt jeweils unabhängig voneinander 2 bis 12 μm, wobei Zwischenschichtdicken von 3 bis 8 μm, insbesondere 3 bis 6 μm, bevorzugt sind. Die angegebenen Werte beziehen sich jeweils auf eine Zwischenschicht.

Die Dicke der erfindungsgemäßen Deckschicht wird unabhängig von anderen Schichten gewählt und liegt bevorzugt im Bereich von 0,3 bis 10 μm, insbesondere 0,5 bis 5 μm, vorzugsweise 0,5 bis 2 μm.

Die Dicke der Basisschicht ergibt sich entsprechend aus der Differenz von. Gesamtdicke und der Dicke der aufgebrachten Deck- und Zwischenschicht/en und kann daher analog der Gesamtdicke innerhalb weiter Grenzen variieren.

Um bestimmte Eigenschaften der erfindungsgemäßen Polypropylenfolie noch weiter zu verbessern, können sowohl die Basisschicht als auch die Zwischenschicht/en und die Deckschicht/en Zusätze in einer jeweils wirksamen Menge enthalten, vorzugsweise Kohlenwasserstoffharz, Antistatika und/oder Antiblockmittel und/oder Gleitmittel und/oder Stabilisatoren und/oder Neutralisationsmittel, die mit den Polymeren der Kernschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt der/den Basis- und/oder Zwischenschicht/en zugesetzt sein. Dessen Anteil liegt in einem Bereich von 1 bis 30 Gew.-%, vorzugsweise 2 bis 10 Gew.-%. Der Erweichungspunkt des Harzes liegt zwischen 100 und 180 °C (gemessen nach DIN 1995-U4, entspricht ASTM E-28), vorzugsweise über 120 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deepdecomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in den Zwischenschichten eingesetzt.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-$(C_1-C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gegebenenfalls biaxial gestreckt (orientiert), die gegebenenfalls biaxial gestreckte Folie thermofixiert und gegebenenfalls an der zur Coronabehandlung vorgesehenen Oberflächenschicht entsprechend flammbehandelt wird.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 110 bis 130 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 140 °C, vorzugsweise im Bereich von 125 bis 135 °C, und die Querstreckung bei einer Temperatur größer 140 °C, vorzugsweise bei 145 bis 160 °C, durchgeführt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäße Mehrschichtfolie zeichnet sich durch sehr gute Siegeleigenschaften, insbesondere durch eine niedrige Siegelanspringtemperatur und eine gute Siegelnahtfestigkeit aus. Gleichzeitig ermöglicht die neue Deckschicht hohe Glanzwerte, wie man sie bisher nur von nichtsiegelfähigen Homopolymeren kennt. Auch die nachteilige durch Beschichtung mit üblichen siegelfähigen Co-oder Terpolymeren verursachte Trübung wird vorteilhafter vermieden, es sei denn man verwendet eine opake Ausführungsform. Das neue Deckschichtmaterial ermöglicht die Herstellung von siegelfähigen, hochglänzenden und hochtransparenten Folien, wobei die bekannten Nachteile der üblichen Deckschichtmaterialien aus Co- oder Terpolymeren vermieden werden (hoher Preis, Beeinträchtigung von Glanz und Transparenz, verfahrenstechnische Aspekte etc.).

**Beispiel 1**

Es wurde durch Coextrusion und anschließende stufenweise Orientierung in Längs- und Querrichtung eine dreischichtige boPP-Folie mit einer Gesamtdicke von 20 μm und einem ABA-Schichtaufbau hergestellt, d. h. die Basisschicht B war beidseitig von zwei Deckschichten vom Typ A umgeben. Vor der Aufrollung wurde die Folie auf der Abzugswalzenseite mit einer Dosisleistung von 15 Wmin/m$^2$ coronabehandelt. Die Oberflächenspannung betrug auf dieser Seite infolge der Coronabehandlung 46 mN/m.

Alle Schichten enthielten zur Stabilisierung 0,12 Gew.-% Pentaerythrithyl-tetrakis-4-(3,5-ditertiärbutyl-4-hydroxyphenyl)-propionat (®Irganox 1010) und als Neutralisationsmittel 0,06 Gew.-% Calciumstearat.

Die Basisschicht bestand im wesentlichen aus einem Propylenhomopolymeren mit einem n-heptanlöslichen Anteil von 3,5 Gew.-% und einem Schmelzpunkt von 162 °C. Der Schmelzflußindex des Propylenhomopolymeren betrug 3,6 g/10 min bei 230 °C und 21,6 N Belastung (DIN 53 735).

Die polyolefinischen Deckschichten A (Tabelle 2) bestanden im wesentlichen aus einem isotaktischen Propylenhomopolymeren mit einem Schmelzpunkt (DSC) von 136 °C. Der durch $^{13}$C-NMR bestimmte Isotaxie-Index des Homopolymeren A betrug 93,2 %. Aus dem $^{13}$C-NMR-Spektrum ließ sich gemäß Formel

$$n_{iso} = 1 + \frac{2\,J_{mm}}{J_{mr}}$$

eine mittlere isotaktische Blocklänge von 27 Monomereinheiten bestimmen. Der Schmelzflußindex dieses homopolymeren Siegelrohstoffs betrug 30 g/10 min, gemessen bei 230 °C und 50 N Belastung (DIN 53 735). Die Deckschicht A enthielt 0,3 Gew.-% des Antiblockmittels Siliciumdioxid mit einem mittleren Teilchendurchmesser von 4 μm. Die Dicke der Deckschichten A betrug 0,8 μm.

**Vergleichsbeispiel 1**

Beispiel 1 wurde wiederholt. Die polyolefinischen Deckschichten A bestanden im wesentlichen aus einem statistischen Copolymeren mit einem $C_2$-Gehalt von 3 bis 4 Gew.-% und einem Schmelzpunkt von 135 °C. Der Schmelzflußindex des copolymeren Siegelrohstoffs A betrug 25 g/10 min, gemessen bei 230 °C und 50 N Belastung (DIN 53 735). Analog zu Beispiel 1 enthielt auch das statistische Copolymer 0,3 Gew.-% des Antiblockmittels Siliciumdioxid mit einem mittleren Teilchendurchmesser von 4 μm. Die Dicke der Deckschichten betrug 0,9 μm.

**Vergleichsbeispiel 2**

Beispiel 1 wurde wiederholt. Die polyolefinischen Deckschichten A bestanden im wesentlichen aus einem statistischen $C_2$-$C_3$-$C_4$-Terpolymeren ($C_2$-Gehalt 1,5 bis 2,5 Gew.-% $C_4$-Gehalt 7 bis 10 Gew.-%) mit einem Schmelzpunkt von ca. 133 °C. DCer Schmelzflußindex des terpolymeren Siegelrohstoffs A betrug 22 g/10 min, gemessen bei 230 °C und 50 N Belastung (DIN 53 735). Analog zu Vergleichsbeispiel 1 enthielt das statistische Terpolymer 0,3 Gew.-% des Antiblockmittels Siliciumdioxid mit einem mittleren Teilchendurchmesser von 0,4 μm. Die Dicke der Deckschichten betrug 0,9 μm.

Die Eigenschaften der Folien sowie deren Aufbau und Zusammensetzung sind in den Tabellen 2, 3 und 4 zusammengestellt.

Zur Charakterisierung der Rohstoffe und der Folien wurden die folgenden Meßmethoden benutzt:

Mittleres Molekulargewicht und Molmassen-Dispersität

Die mittlere Molmasse und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (~135 °C) durchgeführt.

Viskositätszahl

Die Bestimmung der Viskositätszahl wird nach DIN 53 728, Blatt 4, durchgeführt.

Schmelzflußindex

Der Schmelzflußindex wurde in Anlehnung an DIN 53 735 bei 21,6 bzw. 50 N Belastung und 230 °C gemessen.

Schmelzpunkt

DSC-Messung, Maximum der Schmelzkurve, Aufheizgeschwindigkeit 20 °C/min.

Trübung

Die Trübung der Folie wurde in Anlehnung an ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 N/mm$^2$ (Gerät: Brugger Typ NDS, einseitig beheizte Siegelbacke) versiegelt. Die Siegelnahtfestigkeit wurde nach der T-Peel-Methode bestimmt.

Oberflächenspannung

Die Oberflächenspannung wurde mittels der sogenannten Tintenmethode (DIN 53 364) bestimmt.

Bestimmung der Isotaktizität

Die Isotaktizität des Homopolymeren wird aus dessen $^{13}$C-NMR-Spektrum bestimmt. Man vergleicht die Intensitäten von Signalen, welche aus den Methylgruppen mit unterschiedlicher Umgebung resultieren. Im $^{13}$C-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird (⌊⌊⌋ ).

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird (⌊⌐).

3. Bei einer chemischen Verschiebung von etwa 19,3 bis 20 ppm tritt die "rr-Triade" auf, welche den Methylgruppen ohne unmittelbar benachbarte Methylgruppen zugeordnet wird (⌐⌐).

Die Intensitäten J der zugeordneten Signalgruppen wird als Integral der Signale bestimmt. Die Isotaktizität ist wie folgt definiert:

$$J = \frac{J_{mm} + 0{,}5\, J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140 °C aufbewahrt, bis eine homogene Lösung entstanden ist. Um den Lösevorgang zu beschleunigen, wird die Probe von Zeit zu Zeit mit einem Glasstab gerührt.

Die Aufnahme des $^{13}$C-NMR-Spektrums erfolgt bei erhöhter Temperatur (in der Regel 365 K) unter Standardmeßbedingungen (halbquantitativ).

Isotaktische Blocklänge:

Die isotaktische Blocklänge wird ebenfalls aus dem $^{13}$C-NMR-Spektrum des Polymeren bestimmt. Sie ist wie folgt definiert:

$$n_{iso} = 1 + \frac{2 \cdot J_{mm}}{J_{mr}}$$

worin $J_{mm}$ und $J_{mr}$ die Integrale der zugeordneten Signalgruppen bedeuten.

TABELLE 2

|  | Vergleichsbeispiel 1 | Vergleichsbeispiel 2 | Beispiel |
|---|---|---|---|
| Trübung (Gardner) | 2,2-2,5 | 1,9-2,2 | 1,5-1,8 |
| Glanz (20°) | 115 | 125 | 135 |
| Minimale Siegeltemperatur MST (ohne Coronabehandlung) [°C] | 117 | 107 | 118 |
| Minimale Siegeltemperatur MST (mit Coronabehandlung 1,5 kW) [°C] | 120 | 118 | 118 |
| Oberflächenspannung 15 Wmin/m$^2$ Behandlungsdosis, gemessen nach 1 Woche Lagerung [mN/m] | 44 | 41 | 45 |
| Foliendicke [μm] | 20 | 20 | 20 |

## TABELLE 3

| Beispiel | | Vergleichsbeispiel 1 | Vergleichsbeispiel 2 |
|---|---|---|---|
| Basisschicht B:<br>Isotaktisches Polypropylen | | Basisschicht B:<br>Polypropylen | Basisschicht B:<br>Polypropylen |
| Deckschichten A:<br>Isotaktisches Propylenhomopolymer:<br>Isotaktizität nach $^{13}$C-NMR [%]:    93,2<br>mittlere isotaktische Blocklänge $n_{iso}$:    27 | | Deckschichten A:<br>statistisches Ethylen-Propylen-Co-polymer<br>$C_2$-Gehalt: 3-4 % | Deckschichten A:<br>statistisches Ethylen-Propylen-Butylen-Terpolymer<br>$C_2$-Gehalt: 1,5-2,5 %<br>$C_4$-Gehalt: 7-10 % |
| mittlere Molmasse $M_w$ [g/mol]: | $2,1 \cdot 10^5$ | $2,4 \cdot 10^5$ | $2,3 \cdot 10^5$ |
| Molmassen-Dispersität $M_w/M_n$: | 2,0 | 3,5 | 2,8 |
| Schmelzpunkt nach DSC [° C]: | 136 | 133 | 135 |
| Schmelzflußindex MFI (230 °C, 50 N) nach DIN 53 735 [g/10 min]: | 30 | 22 | 25 |
| Viskositätszahl VZ [cm³/g]: | 173 | 245 | 210 |
| Folienaufbau ABA | | Folienaufbau ABA | Folienaufbau ABA |
| Foliendicke: 20 $\mu$m | | Foliendicke: 20 $\mu$m | Foliendicke: 20 $\mu$m |
| Deckschichtdicke:<br>0,8 $\mu$m | | Deckschichtdicke:<br>0,9 $\mu$m | Deckschichtdicke:<br>0,9 $\mu$m |

TABELLE 4

| Zeitabhängigkeit der Oberflächenspannung coronabehandelter 3-Schichtfolien mit Deckschichten des Vergleichsbeispiels 1, Vergleichsbeispiels 2 und Beispiels | | | | | | |
|---|---|---|---|---|---|---|
| | 1. W. | 2. W. | 4. W. | 5. W. | 6. W. | 7. W. |
| VB 1 | 44 | 40 | 38 | 37 | 35 | 35 |
| VB2 | 41 | 38 | 37 | 35 | 35 | 34 |
| Beispiel | 45 | 42 | 39 | 36 | 36 | 36 |
| Coronadosis: 15 Wmin/m$^2$ <br> W = Woche <br> VB = Vergleichsbeispiel | | | | | | |

**Patentansprüche**

1. Mehrschichtfolie, welche mindestens eine Basisschicht, die überwiegend Polypropylen enthält, und mindestens eine Deckschicht umfaßt, dadurch gekennzeichnet, daß die Deckschicht siegelfähig ist und ein isotaktisches Propylenhomopolymer enthält und die Isotaktizität des Propylenhomopolymers mindestens 80 bis 99 % und die Molmassen-Dispersität $M_w/M_n$ des Propylenhomopolymers <5 beträgt

2. Mehrschichtfolie nach Anspruch 1, dadurch gekennzeichnet, daß die Isotaktizität des Propylenhomopolymer der Deckschicht mindestens 88 bis 98% beträgt und dessen mittlere isotaktische Blocklänge $n_{iso}$ zwischen 15 und 140 liegt.

3. Mehrschichtfolie nach Anspruch 1, dadurch gekennzeichnet, daß die mittlere Molmasse $M_w$ des Propylenhomopolymer der Deckschicht im Bereich von $5 \cdot 10^4$ bis $2 \cdot 10^6$ g/mol liegt.

4. Mehrschichtfolie nach Anspruch 1, dadurch gekennzeichnet, daß die Molmassen-Dispersität $M_w/M_n$ des Propylenhomopolymer der Deckschicht <4 beträgt.

5. Mehrschichtfolie nach Anspruch 1, dadurch gekennzeichnet, daß der Schmelzpunkt des Propylenhomopolymer der Deckschicht nach DSC 120 bis 160 °C beträgt.

6. Mehrschichtfolie nach Anspruch 1, dadurch gekennzeichnet, daß der Schmelzflußindex MFI des Propylenhomopolymer der Deckschicht nach DIN 53 735 0,1 bis 1 000 g/10 min (230 °C, 50 N) beträgt.

7. Mehrschichtfolie nach Anspruch 1, dadurch gekennzeichnet, daß die Viskositätszahl VZ des Propylenhomopolymer der Deckschicht im Bereich von 70 bis 2 000 cm$^3$/g liegt.

8. Mehrschichtfolie nach zwei oder mehreren der Ansprüche 1 bis 7.

9. Mehrschichtfolie nach einem oder mehreren der Ansprüche 1 bis 8, dadurch gekennzeichnet, daß das Propylenhomopolymere der Basisschicht mindestens 90 % Propylen enthält und einen Schmelzflußindex von 0,5 g/10 min bis 8 g/10 min nach DIN 53 735 und einen Schmelzpunkt von 150 bis 170 °C aufweist.

10. Mehrschichtfolie nach einem oder mehreren der Ansprüche 1 bis 9, dadurch gekennzeichnet, daß die Basisschicht inerte anorganische und/oder organische Partikel enthält.

11. Mehrschichtfolie nach einem oder mehreren der Ansprüche 1 bis 10, dadurch gekennzeichnet, daß die Basisschicht Harz enthält.

12. Mehrschichtfolie nach einem oder mehreren der Ansprüche 1 bis 11, dadurch gekennzeichnet, daß das Propylenhomopolymer der Deckschicht mindestens 95 % einer Propylen enthält.

**13.** Mehrschichtfolie nach einem oder mehreren der Ansprüche 1 bis 12, dadurch gekennzeichnet, daß das Propylenhomopolymer der Deckschicht 98 bis 100 Gew.-% Propylen enthält.

**14.** Mehrschichtfolie nach einem oder mehreren der Ansprüche 1 bis 13, dadurch gekennzeichnet, daß die Mehrschichtfolie dreischichtig ist.

**15.** Mehrschichtfolie nach einem oder mehreren der Ansprüche 1 bis 14, dadurch gekennzeichnet, daß die Deckschicht 0,4 bis 2,5 μm dick ist.

**16.** Verfahren zur Herstellung der Mehrschichfolie nach Anspruch 1, bei dem die den einzelnen Schichten der Folie entsprechenden Schmelzen durch eine Flachdüse coextrudiert werden, die coextrudierte Folie zur Verfestigung abgekühlt wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert, gegebenenfalls coronabehandelt und anschließend aufgewickelt wird, dadurch gekennzeichnet, daß die coextrudierte Folie über eine Abzugswalze, deren Temperatur zwischen 10 und 90 °C liegt, abgezogen wird.

**17.** Verpackung enthaltend eine Folie nach einem oder mehreren der Ansprüche 1 bis 15.

**Claims**

**1.** A multi-layer film comprising at least one base layer which contains predominantly polypropylene, and at least one outer layer, characterised in that the outer layer is sealable and contains an isotactic propylene homopolymer and in that the isotacticity of the propylene homopolymer amounts to at least 80 to 99% and the molecular mass dispersion $M_w/M_n$ of the propylene homopolymer is <5.

**2.** A multi-layer film according to claim 1, characterised in that the isotacticity of the propylene homopolymer of the outer layer is at least 88 to 98% ad its mean isotactic block length $n_{iso}$ is between 15 and 140.

**3.** A multi-layer film according to claim 1, characterised in that the mean molecular mass $M_w$ of the propylene homopolymer of the outer layer is in the range from $5 \cdot 10^4$ to $2 \cdot 10^6$ g/mol.

**4.** A multi-layer film according to claim 1, characterised in that the molecular mass dispersion $M_w/M_n$ of the propylene homopolymer of the outer layer is <4.

**5.** A multi-layer film according to claim 1, characterised in that the melting point of the propylene homopolymer of the outer layer, according to DSC, is 120 to 160°C.

**6.** A multi-layer film according to claim 1, characterised in that the melt flow index MFI of the propylene homopolymer of the outer layer is, according to DIN 53 735, 0.1 to 1,000 g/10 min (230°C, 50N).

**7.** A multi-layer film according to claim 1, characterised in that the viscosity index VZ of the propylene homopolymer of the outer layer is in the range from 70 to 2,000 sq.cm/g.

**8.** A multi-layer film according to two or more of claims 1 to 7.

**9.** A multi-layer film according to one or more of claims 1 to 8, characterised in that the propylene homopolymer of the base layer contains at least 90% propylene and has a melt flow index of 0.5 g/10min to 8 g/10 min according to DIN 53 735 and a melting point of 150 to 170°C.

**10.** A multi-layer film according to one or more of claims 1, to 9, characterised in that the base layer contains inert inorganic and/or organic particles.

**11.** A multi-layer film according to one or more of claims 1 to 10, characterised in that the base layer contains resin.

**12.** A multi-layer film according to one or more of claims 1 to 11, characterised in that the propylene homopolymer of the outer layer contains at least 95% of a propylene.

**13.** A multi-layer film according to one or more of claims 1 to 12, characterised in that the propylene homopolymer of the outer layer contains 98 to 100% by weight propylene.

14. A multi-layer film according to one or more of claims 1 to 13, characterised in that the multi-layer film has three layers.

15. A multi-layer film according to one or more of claims 1 to 14, characterised in that the outer layer is 0.4 to 2.5 μm thick.

16. A method of manufacturing the multi-layer film according to claim 1 in which the melts corresponding to the individual layers of the film are coextruded through a flat film die, the coextruded film is cooled to solidify it, the film is biaxially stretched with a longitudinal stretching ratio of 4:1 to 7:1 and a transverse stretching ratio of 8:1 to 10:1, the biaxially stretched film is thermoset, possibly corona treated and then wound up, characterised in that the coextruded film is drawn off over a pull-off roll the temperature of which is between 10 and 90°C.

17. A packaging containing a film according to one or more of claims 1 to 15.

**Revendications**

1. Feuille multicouche qui comprend au moins une couche de base qui contient du polypropylène à titre principal et au moins une couche de recouvrement, caractérisée en ce que la couche de recouvrement est apte au thermosoudage et contient un homopolymère de propylène isotactique, l'isotacticité de l'homopolymère de propylène s'élevant d'au moins 80 à 99% et la dispersivité des masses molaires $M_w/M_n$ de l'homopolymère de propylène étant < 5.

2. Feuille multicouche selon la revendication 1, caractérisée en ce que l'isotacticité de l'homopolymère de propylène de la couche de recouvrement s'élève d'au moins 88 à 98% et sa longueur de séquence isotactique moyenne $\Pi_{iso}$ s'élève entre 15 et 140.

3. Feuille multicouche selon la revendication 1, caractérisée en ce que la masse molaire moyenne $M_w$ de l'homopolymère de propylène de la couche de recouvrement se situe dans le domaine de $5.10^4$ à $2.10^6$ g/mole.

4. Feuille multicouche selon la revendication 1, caractérisée en ce que la dispersivité des masses molaires $M_w/M_n$ de l'homopolymère de propylène de la couche de recouvrement est < 4.

5. Feuille multicouche selon la revendication 1, caractérisée en ce que le point de fusion de l'homopolymère de propylène de la couche de recouvrement conformément à la calorimétrie par analyse différentielle s'élève de 120 à 160°C.

6. Feuille multicouche selon la revendication 1, caractérisée en ce que l'indice de fluidité à chaud (MFI) de l'homopolymère de propylène de la couche de recouvrement selon la norme DIN 53735 s'élève de 0,1 à 1000 g/10 min (à une température de 230°C, sous une charge de 50 N).

7. Feuille multicouche selon la revendication 1, caractérisée en ce que l'indice de viscosité VZ de l'homopolymère de propylène de la couche de recouvrement se situe dans le domaine de 70 à 2.000 $cm^3$/g.

8. Feuille multicouche selon deux des revendications 1 à 7 ou plus.

9. Feuille multicouche selon une ou plusieurs des revendications 1 à 8, caractérisée en ce que l'homopolymère de propylène de la couche de base contient du propylène à concurrence d'au moins 90% et présente un indice de fluidité à chaud de 0,5 g/10 min à 8 g/10 min conformément à la norme DIN 53735 et un point de fusion de 150 à 170°C.

10. Feuille multicouche selon une ou plusieurs des revendications 1 à 9, caractérisée en ce que la couche de base contient des particules inertes inorganiques et/ou organiques.

11. Feuille multicouche selon une ou plusieurs des revendications 1 à 10, caractérisée en ce que la couche de base contient une résine.

**12.** Feuille multicouche selon une ou plusieurs des revendications 1 à 11, caractérisée en ce que l'homopolymère de propylène de la couche de recouvrement contient un propylène à concurrence d'au moins 95%.

**13.** Feuille multicouche selon une ou plusieurs des revendications 1 à 12, caractérisée en ce que l'homopolymère de propylène de la couche de recouvrement contient du propylène à concurrence de 98 à 100% en poids.

**14.** Feuille multicouche selon une ou plusieurs des revendications 1 à 13, caractérisée en ce que la feuille multicouche comprend trois couches.

**15.** Feuille multicouche selon une ou plusieurs des revendications 1 à 14, caractérisée en ce que l'épaisseur de la couche de recouvrement s'élève de 0,4 à 2,5 µm.

**16.** Procédé pour la fabrication de la feuille multicouche selon la revendication 1, dans lequel on soumet à une coextrusion via une filière à lente large, les masses fondues correspondant aux couches individuelles de la feuille, on refroidit la feuille coextrudée à des fins de durcissement, on soumet la feuille à un étirage biaxe avec un rapport d'étirage en direction longitudinale de 4:1 à 7:1 et avec un rapport d'étirage en direction transversale de 8:1 à 10:1, on soumet la feuille ayant subi un étirage biaxe à un thermofixage, le cas échéant on la soumet à un traitement par effluves négatives, puis on l'enroule, caractérisé en ce que la feuille coextrudée est tendue sur un rouleau tendeur dont la température s'élève entre 10 et 90°C.

**17.** Emballage contenant une feuille selon une ou plusieurs des revendications 1 à 15.